# EUROPEAN PATENT APPLICATION

(11) **EP 4 340 066 A1**
(43) Date of publication of application: **20.03.2024**
(21) Application number: 21941553.6
(22) Date of filing: 10.08.2021
(51) Int. Cl.: H01M 4/48, H01M 4/62, H01M 10/0525

(54) **UNIFORMLY MODIFIED CATHODE MATERIAL FOR SILICON-BASED LITHIUM ION BATTERY, PREPARATION METHOD THEREFOR AND APPLICATION THEREOF**

(30) Priority: 13.05.2021 CN 202110524182
(71) Applicant: Tianmulake Excellent Anode Materials Co., Ltd., Liyang, Jiangsu 213330 (CN)
(72) Inventor: LUO, Fei, Liyang, Jiangsu 213330 (CN)
(74) Representative: Glück Kritzenberger Patentanwälte PartGmbB
(86) International application number: PCT/CN2021/111679
(87) International publication number: WO 2022/236984

(57) **Abstract**

The present invention relates to a uniformly modified cathode material for a silicon-based lithium ion battery, a preparation method therefor and an application thereof. The structure of cathode material for a silicon-based lithium ion battery is that carbon atoms are uniformly dispersed and distributed in a silicon (II) oxide matrix on an atomic scale. In a focused ion beam-transmission electron microscope (FIB-TEM) test of the cathode material for the silicon-based lithium ion battery, an energy spectrum surface sweep of a particle section shows that the carbon elements, oxygen elements and silicon element inside the particles are uniformly distributed; the average particle diameter D50 of the particles in the cathode material for the silicon-based lithium ion battery is 1 nm to 100 µm, and the specific surface area is 0.5 m2/g to 40 m2/g; and the mass of the carbon atoms accounts for 0.1% to 40% of the mass of the silicon (II) oxide matrix. In the present invention, a carbon-containing gas source is introduced during the preparation process of silicon (II) oxide, and the distribution of carbon atoms in the silicon (II) oxide is bulk phase distribution, so that the cathode material has the advantages of carbon bulk phase doping, which improves the electrical conductivity of the material and the cycling stability of lithium ion batteries.

## Description

This application claims priority for Chinese patent application No. 202110524182.2, entitled "UNIFORMLY MODIFIED NEGATIVE ELECTRODE MATERIAL FOR SILICON-BASED LITHIUM ION BATTERY, PREPARATION METHOD THEREFOR AND APPLICATION THEREOF", filed with China National Intellectual Property Administration on May 13, 2021.

### BACKGROUND OF THE INVENTION

### 1. Technical Field

The present invention relates to the technical field of materials, in particular to a uniformly modified negative electrode material for a silicon-based lithium ion battery, a preparation method therefor and an application thereof.

### 2. Description of Related Art

With the needs of economic and social development, the continuous consumption of natural resources, particularly non-renewable resources such as petroleum and natural gas, has led to a gradual scarcity. Additionally, the environmental pollution resulting from reckless exploitation and utilization of petroleum cannot be underestimated. Consequently, the search for clean, environmentally friendly, and efficient energy sources has become the top priority of scientific researchers. Lithium-ion battery technology stands out as a leading example of clean and environmentally friendly new energy technologies.

A negative electrode material plays a critical role in lithium-ion battery technology. However, a currently available graphite negative electrode has reached its technical limits due to its low gram capacity. To overcome this limitation, silicon has emerged as a promising alternative with a specific capacity up to 4200 mAh/g and three-dimensional diffusion channels. The silicon-based negative electrode material offers the advantage of high energy density. Nonetheless, there are technical challenges that need to be addressed, such as volume expansion and poor conductivity, which hinder its practical applications.

A carbon coating is a commonly adopted modification method for the silicon-based negative electrode material. At present, commercial silicon (II) oxide on the market is generally coated with carbon, which improves the surface conductivity of the material, avoids direct contact with an electrolyte and improves the cycle performance of the material. However, the carbon coating can only change the surface conductivity. To achieve rapid charging, it is necessary to improve the conductivity within the particles.

### BRIEF SUMMARY OF THE INVENTION

The embodiments of the present invention provide a uniformly modified negative electrode material for a silicon-based lithium ion battery, a preparation method therefor and an application thereof. Carbon, oxygen and silicon elements are uniformly distributed in the negative electrode material, and the conductivity of the material and the cycle stability of the lithium ion battery are improved by bulk phase doping of carbon.

In a first aspect, an embodiment of the present invention provides a uniformly modified negative electrode material for a silicon-based lithium ion battery. The negative electrode material for the silicon-based lithium ion battery has a structure that carbon atoms are uniformly dispersed in a silicon (II) oxide matrix at an atomic level; and in a focused ion beam-transmission electron microscope (FIB-TEM) test of the negative electrode material for the silicon-based lithium ion battery, an energy spectrum surface sweep of a particle section shows that carbon, oxygen and silicon elements inside the particles are uniformly distributed;
an average particle diameter D₅₀ of the particles in the negative electrode material for the silicon-based lithium ion battery is 1 nm-100 µm, and a specific surface area is 0.5 m²/g-40 m²/g; and a mass of the carbon atoms accounts for 0.1%-40% of a mass of the silicon (II) oxide matrix.

Preferably, a carbon coating layer is further provided outside the negative electrode material for the silicon-based lithium ion battery, and a mass of the carbon coating layer accounts for 0-20% of the mass of the silicon (II) oxide matrix.

More preferably, the mass of the carbon atoms accounts for 0.5%-10% of the mass of the silicon (II) oxide matrix, and the mass of the carbon coating layer accounts for 0-10% of the mass of the silicon (II) oxide matrix.

In a second aspect, an embodiment of the present invention provides a preparation method for the negative electrode material for the silicon-based lithium ion battery described in the first aspect, including:
performing a gas phase mixing reaction on a carbon-containing gas source and a preheated mixed vapor of silicon and silicon dioxide for 1-24 hours under a protective atmosphere to obtain a material in which carbon atoms are uniformly dispersed in a silicon (II) oxide matrix at an atomic level; and
cooling the material to room temperature and discharging, pulverizing and screening the material to obtain particles in which the carbon atoms are uniformly dispersed in the silicon (II) oxide matrix at an atomic level, which are the negative electrode material for the silicon-based lithium ion battery.

Preferably, the carbon-containing gas source includes one or more of methane, propane, butane, acetylene, ethylene, propylene, butadiene or carbon monoxide.

Preferably, after the material is cooled to room temperature, discharged, pulverized and screened, the preparation method further includes: performing a carbon coating on the screened material, and obtaining the negative electrode material after grading.

Further preferably, the carbon coating includes at least one of gas-phase coating, liquid-phase coating or solid-phase coating.

In a third aspect, an embodiment of the present invention provides a negative plate including the negative electrode material for the silicon-based lithium ion battery described in the first aspect.

In a fourth aspect, an embodiment of the present invention provides a lithium battery including the negative plate described in the third aspect.

According to the negative electrode material for the silicon-based lithium ion battery provided by the present invention in which carbon atoms are uniformly dispersed at an atomic level, through the bulk phase distribution of carbon in silicon (II) oxide, the conductivity inside the silicon (II) oxide particles is improved, so that the rapid charging performance of the material is enhanced; and volume expansion and contraction of silicon (II) oxide in a lithium dis-embedding process are buffered, and deformation stress is mitigated, so that the cycle performance of the material is improved.

### BRIEF DESCRIPTION OF THE SEVERAL VIEWS OF THE DRAWINGS

The technical solutions of the embodiments of the present invention will be described in further detail with reference to the drawings and embodiments.
Fig. 1 is a flowchart of a preparation method for a negative electrode material for a silicon-based lithium ion battery according to an embodiment of the present invention.
Fig. 2 is a FIB-TEM energy spectrum surface sweep diagram of a silicon-based negative electrode material provided in Embodiment 1 of the present invention in which carbon atoms are uniformly dispersed at an atomic level.
Fig. 3 is a FIB-TEM high-resolution electron micrograph of a silicon-based negative electrode material provided in Embodiment 1 of the present invention in which carbon atoms are uniformly dispersed at an atomic level.

### DETAILED DESCRIPTION OF THE INVENTION

The present invention will be further explained below by referring to drawings and specific embodiments, but it should be understood that these embodiments are only for more detailed explanation, and should not be construed as limiting the present invention in any way, that is, not intended to limit the scope of protection of the present invention.

A negative electrode material for a silicon-based lithium ion battery in the present invention has a structure that carbon atoms are uniformly dispersed in a silicon (II) oxide matrix at an atomic level. In a focused ion beam-transmission electron microscope (FIB-TEM) test of the negative electrode material for the silicon-based lithium ion battery, an energy spectrum surface sweep of a particle section shows that carbon, oxygen and silicon elements inside the particles are uniformly distributed;
an average particle diameter D₅₀ of the particles in the negative electrode material for the silicon-based lithium ion battery is 1 nm-100 µm, and a specific surface area is 0.5 m²/g-40 m²/g; and a mass of the carbon atoms accounts for 0.1%-40% of a mass of the silicon (II) oxide matrix. Preferably, the mass of the carbon atoms accounts for 0.5%-10% of the mass of the silicon (II) oxide matrix.

A carbon coating layer is further provided outside the negative electrode material for the silicon-based lithium ion battery, the mass of the carbon coating layer accounts for 0-20% of the mass of the silicon (II) oxide matrix, and preferably, the mass of the carbon coating layer accounts for 0-10% of the mass of the silicon (II) oxide matrix.

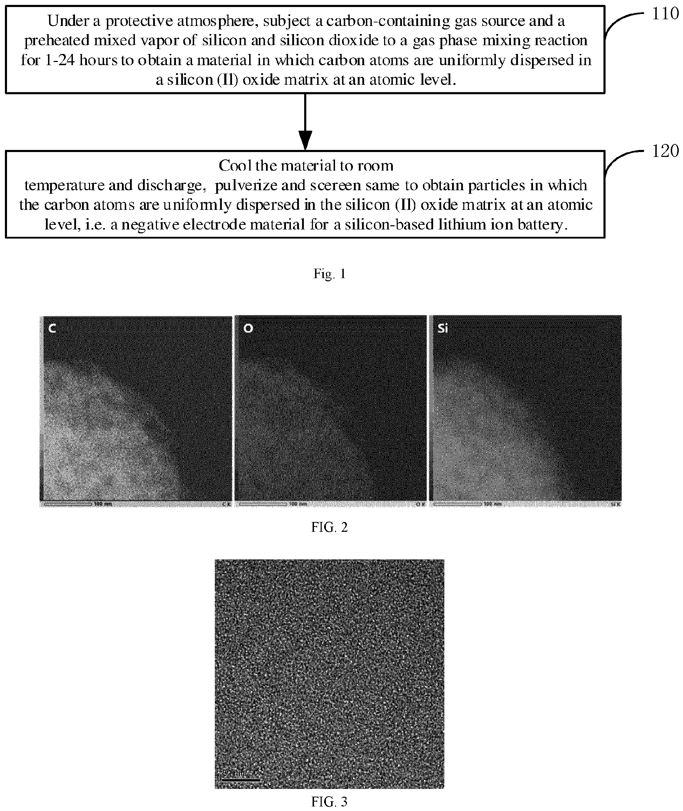

The negative electrode material for the silicon-based lithium ion battery in the present invention can be obtained by the following preparation method. As shown in Fig. 1, the preparation method mainly includes the following steps.

Step 110, a gas phase mixing reaction is performed on a carbon-containing gas source and a preheated mixed vapor of silicon and silicon dioxide for 1-24 hours under a protective atmosphere to obtain a material in which carbon atoms are uniformly dispersed in a silicon (II) oxide matrix at an atomic level.

Specifically, the protective atmosphere can be an N₂ or Ar atmosphere.

The carbon-containing gas source includes one or more of methane, propane, butane, acetylene, ethylene, propylene, butadiene or carbon monoxide.

Step 120, the material is cooled to room temperature and the material is discharged, pulverized and screened to obtain particles in which the carbon atoms are uniformly dispersed in the silicon (II) oxide matrix at an atomic level, which are the negative electrode material for the silicon-based lithium ion battery.

Further, to prepare a negative electrode material for a silicon-based lithium ion battery with a carbon coating layer on the outside, carbon coating may be performed on the pulverized material, and then grading is performed to obtain the negative electrode material for the silicon-based lithium ion battery. Specifically, the carbon coating comprises at least one of gas-phase coating, liquid-phase coating and solid-phase coating. The above three methods are commonly used in the preparation of battery materials, and will not be explained in detail here.

According to the negative electrode material for the silicon-based lithium ion battery provided by the present invention in which carbon atoms are uniformly dispersed at an atomic level, through the bulk phase distribution of carbon in silicon (II) oxide, the conductivity inside the silicon (II) oxide particles is improved, so that the rapid charging performance of the material is enhanced; and volume expansion and contraction of silicon (II) oxide in a lithium dis-embedding process are buffered, and deformation stress is mitigated, so that the cycle performance of the material is improved.

The negative electrode material for the silicon-based lithium ion battery provided by the present invention can be used for preparing negative plates to be applied to lithium batteries.

In order to better understand the technical solutions provided by the present invention, the specific process of preparing the negative electrode material for the silicon-based lithium ion battery by the method provided in the above embodiment of the present invention, and the method and characteristics of its application in a lithium secondary battery are described below with several specific examples.

### Embodiment 1

1 kg of silicon powder and 1 kg of silicon dioxide are heated to 1300°C in a high-temperature reaction furnace to be vaporized; 1.6 L of methane is slowly introduced with an argon gas flow to react for 3 hours, and then the mixture is cooled to room temperature; and after discharging and pulverizing, a silicon (II) oxide negative electrode material with carbon atoms uniformly dispersed at an atomic level is obtained. It is tested, by a carbon-sulfur analyzer, that the carbon content is 2%.

An FIB-TEM test is carried out on the silicon (II) oxide negative electrode material with carbon atoms uniformly dispersed at an atomic level, and carbon distribution in the particles is observed by energy spectrum detection. Fig. 2 is an FIB-TEM energy spectrum surface sweep diagram, and Fig. 3 is an FIB-TEM high-resolution electron micrograph. As can be seen from the energy spectrum surface sweep diagram in Fig. 2, Si, O and C are uniformly distributed in the particles. From the high-resolution electron micrograph in Fig. 3, it can be seen that the silicon (II) oxide with carbon atoms uniformly dispersed at an atomic level is amorphous as the atoms inside are disordered.

Then, carbon coating is performed on the silicon (II) oxide negative electrode material. 2 kg of the material is placed in a rotary furnace, the temperature is raised to 1000°C under the protection of argon, and then argon and mixed gas of propylene and acetylene with the same volume as argon are introduced for gas-phase coating, wherein the volume ratio of propylene to acetylene is 1:1; and the temperature is kept for 2 hours, an organic gas source is turned off, and after cooling, discharging and grading, a carbon-coated silicon (II) oxide negative electrode material with carbon atoms uniformly dispersed at an atomic level is obtained, of which the total carbon content is 5%.

The carbon-coated silicon (II) oxide material with carbon atoms uniformly distributed at an atomic level is used as a negative electrode material. The negative electrode material, conductive carbon black (SP) serving as a conductive additive, and polyvinylidene fluoride (PVDF) serving as an adhesive are weighed according to the ratio of 95%: 2%: 3%, and slurry is prepared in a beater at room temperature. The prepared slurry is evenly applied to copper foil. After being dried in a blast drying oven at 50°C for 2 hours, the material is cut into 8×8 mm pole pieces, and then vacuum drying is performed in a vacuum drying oven at 100°C for 10 hours. The dried pole pieces are immediately transferred into a glove box for battery assembly.

Simulated battery assembly is performed in a glove box containing a high purity Ar atmosphere, with lithium metal serving as a counter electrode and a solution of 1 mol LiPF₆ in ethylene carbonate/dimethyl carbonate (EC/DMC V:V = 1:1) as an electrolyte. A constant current charge-discharge mode test is carried out by using a charge-discharge instrument. The discharge cut-off voltage is 0.005 V and the charge cut-off voltage is 1.5 V A first cycle of charge-discharge test is carried out at C/10 current density, and a second cycle of discharge test is carried out at C/10 current density. The test results of initial efficiency, 5C reversible capacity and cycle performance at 5C rate are listed in Table 1.

### Embodiment 2

3 kg of silicon powder and 3 kg of silicon dioxide are heated to 1350°C in a high-temperature reaction furnace to be vaporized; 23.4 L of dimethylmethane is slowly introduced with an argon gas flow to react for 8 hours, and then the mixture is cooled to room temperature; and after discharging and pulverizing, a silicon (II) oxide negative electrode material with carbon atoms uniformly dispersed at an atomic level is obtained. It is tested, by a carbon-sulfur analyzer, that the carbon content is 1.5%. Then, carbon coating is performed on the material. 2 kg of the material is placed in a rotary furnace, the temperature is raised to 1100°C under the protection of argon, and then argon and mixed gas of propylene and methane with the same volume as argon are introduced for gas-phase coating, wherein the volume ratio of propylene to methane is 2:3; and the temperature is kept for 3 hours, an organic gas source is turned off, and after cooling, a carbon-coated silicon (II) oxide negative electrode material with carbon atoms uniformly dispersed at an atomic level is obtained, in which the total carbon content is 6.5%.

The preparation process of a negative plate, battery assembly and battery testing are the same as those in Embodiment 1. The test results of initial efficiency, 5C reversible capacity and cycle performance at 5C rate are listed in Table 1.

### Embodiment 3

2 kg of silicon powder and 2 kg of silicon dioxide are heated to 1350°C in a high-temperature reaction furnace to be vaporized; 1 L of propylene is slowly introduced with an argon gas flow to react for 5 hours, and then the mixture is cooled to room temperature; and after discharging and pulverizing, a silicon (II) oxide negative electrode material with carbon atoms uniformly dispersed at an atomic level is obtained. It is tested, by a carbon-sulfur analyzer, that the carbon content is 3.1%. Then, carbon coating is performed on the material. 2 kg of the material is placed in a rotary furnace, the temperature is raised to 950°C under the protection of argon, and then argon and propane are introduced according to the volume ratio of 1:1 for gas-phase coating; and the temperature is kept for 2.5 hours, an organic gas source is turned off, and after cooling, a carbon-coated silicon (II) oxide negative electrode material with carbon atoms uniformly dispersed at an atomic level is obtained, of which the total carbon content is 8.2%.

The preparation process of a negative plate, battery assembly and battery testing are the same as those in Embodiment 1. The test results of initial efficiency, 5C reversible capacity and cycle performance at 5C rate are listed in Table 1.

### Embodiment 4

2 kg of silicon powder and 2 kg of silicon dioxide are heated to 1300°C in a high-temperature reaction furnace to be vaporized; 1 L of ethylene is slowly introduced with an argon gas flow to react for 5 hours, and then the mixture is cooled to room temperature; and after discharging and pulverizing, a silicon (II) oxide negative electrode material with carbon atoms uniformly dispersed at an atomic level is obtained. It is tested, by a carbon-sulfur analyzer, that the carbon content is 2.8%. Then, carbon coating is performed on the material. 2 kg of the material is placed in a rotary furnace, the temperature is raised to 1150°C under the protection of argon, and then argon and propane are introduced according to the volume ratio of 1:1 for gas-phase coating; and the temperature is kept for 2.5 hours, an organic gas source is turned off, and after cooling, a carbon-coated silicon (II) oxide negative electrode material with carbon atoms uniformly dispersed at an atomic level is obtained, of which the total carbon content is 7.8%.

The preparation process of a negative plate, battery assembly and battery testing are the same as those in Embodiment 1. The test results of initial efficiency, 5C reversible capacity and cycle performance at 5C rate are listed in Table 1.

### Embodiment 5

3 kg of silicon powder and 3 kg of silicon dioxide are heated to 1400°C in a high-temperature reaction furnace to be vaporized; mixed gas of 11.7 L of acetylene and 5 L of methane is slowly introduced with an argon gas flow to react for 8 hours, and then the mixture is cooled to room temperature; and after discharging and pulverizing, a silicon (II) oxide negative electrode material with carbon atoms uniformly dispersed at an atomic level is obtained. It is tested, by a carbon-sulfur analyzer, that the carbon content is 1.5% by using a carbon-sulfur analyzer. Then, carbon coating is performed on the material. 2 kg of the material is placed in a rotary furnace, the temperature is raised to 1100°C under the protection of argon, and then argon and mixed gas of propylene and methane with the same volume as argon are introduced for gas-phase coating, wherein the volume ratio of propylene to methane is 2:3; and the temperature is kept for 3 hours, an organic gas source is turned off, and after cooling, a carbon-coated silicon (II) oxide negative electrode material with carbon atoms uniformly dispersed at an atomic level is obtained, of which the total carbon content is 6.5%.

The preparation process of a negative plate, battery assembly and battery testing are the same as those in Embodiment 1. The test results of initial efficiency, 5C reversible capacity and cycle performance at 5C rate are listed in Table 1.

### Embodiment 6

2 kg of silicon powder and 2 kg of silicon dioxide are heated to 1250°C in a high-temperature reaction furnace to be vaporized; 1 L of acetylene gas is slowly introduced with an argon gas flow to react for 5 hours, and then the mixture is cooled to room temperature; and after discharging and pulverizing, a silicon (II) oxide negative electrode material with carbon atoms uniformly dispersed at an atomic level is obtained. It is tested, by a carbon-sulfur analyzer, that the carbon content is 2.8%. Then, carbon coating is performed on the material. 2 kg of the material is placed in a rotary furnace, the temperature is raised to 1150°C under the protection of argon, and then argon and propane are introduced according to the volume ratio of 1:1 for gas-phase coating; and the temperature is kept for 2.5 hours, an organic gas source is turned off, and after cooling, a carbon-coated silicon (II) oxide negative electrode material with carbon atoms uniformly dispersed at an atomic level is obtained, of which the total carbon content is 5.8%.

The preparation process of a negative plate, battery assembly and battery testing are the same as those in Embodiment 1. The test results of initial efficiency, 5C reversible capacity and cycle performance at 5C rate are listed in Table 1.

### Embodiment 7

2 kg of silicon powder and 2 kg of silicon dioxide are heated to 1200°C in a high-temperature reaction furnace to be vaporized; 1 L of butane gas is slowly introduced with an argon gas flow to react for 5 hours, and then the mixture is cooled to room temperature; and after discharging and pulverizing, a silicon (II) oxide negative electrode material with carbon atoms uniformly dispersed at an atomic level is obtained. It is tested, by a carbon-sulfur analyzer, that the carbon content is 3.1%. Then, carbon coating is performed on the material. 2 kg of the material is placed in a rotary furnace, the temperature is raised to 1100°C under the protection of argon, and then argon and acetylene are introduced according to the volume ratio of 1:2 for gas-phase coating; and the temperature is kept for 3 hours, an organic gas source is turned off, and after cooling, a carbon-coated silicon (II) oxide negative electrode material with carbon atoms uniformly dispersed at an atomic level is obtained, of which the total carbon content is 6.2%.

The preparation process of a negative plate, battery assembly and battery testing are the same as those in Embodiment 1. The test results of initial efficiency, 5C reversible capacity and cycle performance at 5C rate are listed in Table 1.

### Embodiment 8

1 kg of silicon powder and 1 kg of silicon dioxide are heated to 1500°C in a high-temperature reaction furnace to be vaporized; 2 L of butadiene gas is slowly introduced with an argon gas flow to react for 6 hours, and then the mixture is cooled to room temperature; and after discharging and pulverizing, a silicon (II) oxide negative electrode material with carbon atoms uniformly dispersed at an atomic level is obtained. It is tested, by a carbon-sulfur analyzer, that the carbon content is 2.6%. Then, carbon coating is performed on the material. 2 kg of the material is placed in a rotary furnace, the temperature is raised to 1000°C under the protection of argon, and then argon and mixed gas of acetylene and dimethylmethane with the same volume as argon are introduced for gas-phase coating, wherein the volume ratio of acetylene to dimethylmethane is 3:1; and the temperature is kept for 3 hours, an organic gas source is turned off, and after cooling, a carbon-coated silicon (II) oxide negative electrode material with carbon atoms uniformly dispersed at an atomic level is obtained, of which the total carbon content is 4.9%.

The preparation process of a negative plate, battery assembly and battery testing are the same as those in Embodiment 1. The test results of initial efficiency, 5C reversible capacity and cycle performance at 5C rate are listed in Table 1.

### Embodiment 9

3 kg of silicon powder and 3 kg of silicon dioxide are heated to 1300°C in a high-temperature reaction furnace to be vaporized; 1.4 L of carbon monoxide gas is slowly introduced with an argon gas flow to react for 12 hours, and then the mixture is cooled to room temperature; and after discharging and pulverizing, a silicon (II) oxide negative electrode material with carbon atoms uniformly dispersed at an atomic level is obtained. It is tested, by a carbon-sulfur analyzer, that the carbon content is 3.3%. Then, carbon coating is performed on the material. 2 kg of the material is placed in a rotary furnace, the temperature is raised to 1200°C under the protection of argon, and then argon and acetylene are introduced according to the volume ratio of 1:2 for gas-phase coating; and the temperature is kept for 3 hours, an organic gas source is turned off, and after cooling, a carbon-coated silicon (II) oxide negative electrode material with carbon atoms uniformly dispersed at an atomic level is obtained, of which the total carbon content is 8.3%.

The preparation process of a negative plate, battery assembly and battery testing are the same as those in Embodiment 1. The test results of initial efficiency, 5C reversible capacity and cycle performance at 5C rate are listed in Table 1.

### Embodiment 10

3 kg of silicon powder and 3 kg of silicon dioxide are heated to 1300°C in a high-temperature reaction furnace to be vaporized; mixed gas of 1.2 L of carbon monoxide and 1.2 L of acetylene is slowly introduced with an argon gas flow to react for 10 hours, and then the mixture is cooled to room temperature; and after discharging and pulverizing, a silicon (II) oxide negative electrode material with carbon atoms uniformly dispersed at an atomic level is obtained. It is tested, by a carbon-sulfur analyzer, that the carbon content is 3.3%. Then, carbon coating is performed on the material. The pulverized material is mixed with petroleum asphalt according to the mass ratio of 20:1, and placed in a high-temperature furnace for heat treatment at 900°C in a nitrogen atmosphere for 2 hours, and after cooling and grading, a carbon-coated silicon (II) oxide negative electrode material with carbon atoms uniformly dispersed at an atomic level is obtained, of which the total carbon content is 5%.

The carbon-coated silicon (II) oxide negative electrode material with carbon atoms uniformly dispersed at an atomic level is used as a negative electrode material. The negative electrode material, conductive carbon black (SP) serving as a conductive additive, and polyvinylidene fluoride (PVDF) serving as an adhesive are weighed according to the ratio of 95%: 2%: 3%, and slurry is prepared in a beater at room temperature. The prepared slurry is evenly applied to copper foil. After being dried in a blast drying oven at 50°C for 2 hours, the material is cut into 8×8 mm pole pieces, and then vacuum drying is performed in a vacuum drying oven at 100°C for 10 hours. The dried pole pieces are immediately transferred into a glove box for battery assembly.

Simulated battery assembly is performed in a glove box containing a high purity Ar atmosphere, with the above electrode serving as a negative electrode, a ternary positive electrode material NCM811 as a counter electrode, and garnet-type Li₇La₃Zr₂O₁₂ (LLZO) as a solid electrolyte. An all-solid-state button battery is assembled in the glove box, and is charged to evaluate its electrochemical performance. A constant current charge-discharge mode test is carried out by using a charge-discharge instrument. The discharge cut-off voltage is 0.005 V and the charge cut-off voltage is 1.5 V A first cycle of charge-discharge test is carried out at C/10 current density, and a second cycle of discharge test is carried out at C/10 current density. The test results of initial efficiency, 5C reversible capacity and cycle performance at 5C rate are listed in Table 1.

### Embodiment 11

2 kg of silicon powder and 2 kg of silicon dioxide are heated to 1300°C in a high-temperature reaction furnace to be vaporized; mixed gas of 0.9 L of methane, 1.2 L of propylene and 1.3 L of propane is slowly introduced with an argon gas flow to react for 6 hours, and then the mixture is cooled to room temperature; and after discharging and pulverizing, a silicon (II) oxide negative electrode material with carbon atoms uniformly dispersed at an atomic level is obtained. It is tested, by a carbon-sulfur analyzer, that the carbon content is 3.1%. Then, carbon coating is performed on the material. The pulverized material and phenolic resin are dissolved in an alcohol solvent according to the ratio of 20:1, and the mixture is stirred for 6 hours to form uniform slurry. Then, the slurry is directly dried and placed in a high-temperature furnace to be sintered for 2 hours at 900°C under the protection of nitrogen, and after cooling, grading and screening are performed to obtain a carbon-coated silicon (II) oxide negative electrode material with carbon atoms uniformly dispersed at an atomic level, of which the total carbon content is 4.8%.

The carbon-coated silicon (II) oxide negative electrode material with carbon atoms uniformly dispersed at an atomic level is used as a negative electrode material. The negative electrode material, conductive carbon black (SP) serving as a conductive additive, and polyvinylidene fluoride (PVDF) serving as an adhesive are weighed according to the ratio of 95%:2%:3%, and slurry is prepared in a beater at room temperature. The prepared slurry is evenly applied to copper foil. After being dried in a blast drying oven at 50°C for 2 hours, the material is cut into 8X8 mm pole pieces, and then vacuum drying is performed in a vacuum drying oven at 100°C for 10 hours. The dried pole pieces are immediately transferred into a glove box for battery assembly.

Simulated battery assembly is performed in a glove box containing a high purity Ar atmosphere, with the above electrode serving as a negative electrode, a ternary positive electrode material NCM811 as a counter electrode, and a polyolefin-based gel polymer electrolyte membrane as a semi-solid electrolyte. A semi-solid-state button battery is assembled in the glove box, and is charged to evaluate its electrochemical performance. A constant current charge-discharge mode test is carried out by using a charge-discharge instrument. The discharge cut-off voltage is 0.005 V and the charge cut-off voltage is 1.5 V A first cycle of charge-discharge test is carried out at C/10 current density, and a second cycle of discharge test is carried out at C/10 current density. The test results of initial efficiency, 5C reversible capacity and cycle performance at 5C rate are listed in Table 1.

### Embodiment 12

1 kg of silicon powder and 1 kg of silicon dioxide are heated to 1400°C in a high-temperature reaction furnace to be vaporized; mixed gas of 0.9 L of methane and 1.2 L of propylene is slowly introduced with an argon gas flow to react for 8 hours, and then the mixture is cooled to room temperature; and after discharging and pulverizing, a silicon (II) oxide negative electrode material with carbon atoms uniformly dispersed at an atomic level is obtained.

The preparation process of a negative plate, battery assembly and battery testing are the same as those in Embodiment 1. The test results of initial efficiency, 5C reversible capacity and cycle performance at 5C rate are listed in Table 1.

### Embodiment 13

3 kg of silicon powder and 3 kg of silicon dioxide are heated to 1350°C in a high-temperature reaction furnace to be vaporized; mixed gas of 5 L of acetylene and 5 L of ethylene is slowly introduced with an argon gas flow to react for 6 hours, and then the mixture is cooled to room temperature; and after discharging and pulverizing, a silicon (II) oxide negative electrode material with carbon atoms uniformly dispersed at an atomic level is obtained. It is tested, by a carbon-sulfur analyzer, that the carbon content is 3.5%.

The preparation process of a negative plate, battery assembly and battery testing are the same as those in Embodiment 1. The test results of initial efficiency, 5C reversible capacity and cycle performance at 5C rate are listed in Table 1.

### Embodiment 14

3 kg of silicon powder and 3 kg of silicon dioxide are heated to 1400°C in a high-temperature reaction furnace to be vaporized; 5 L of butadiene is slowly introduced with an argon gas flow to react for 4 hours, and then the mixture is cooled to room temperature; and after discharging and pulverizing, a silicon (II) oxide negative electrode material with carbon atoms uniformly dispersed at an atomic level is obtained. It is tested, by a carbon-sulfur analyzer, that the carbon content is 2.7%.

The preparation process of a negative plate, battery assembly and battery testing are the same as those in Embodiment 1. The test results of initial efficiency, 5C reversible capacity and cycle performance at 5C rate are listed in Table 1.

### Comparative example 1

1 kg of silicon powder and 1 kg of silicon dioxide are heated to 1300°C in a high-temperature reaction furnace to be vaporized, and after 3 hours of reaction, the mixture is cooled to room temperature; and after discharging and pulverizing, a silicon (II) oxide negative electrode material is obtained.

Then, carbon coating is performed on the material. 2 kg of the material is placed in a rotary furnace, the temperature is raised to 1000°C under the protection of argon, and then argon and mixed gas of propylene and acetylene with the same volume as argon are introduced for gas-phase coating, wherein the volume ratio of propylene to acetylene is 1:1; and the temperature is kept for 2 hours, an organic gas source is turned off, and after cooling, discharging and grading, a carbon-coated silicon (II) oxide negative electrode material is obtained, of which the total carbon content is 3%.
The preparation process of a negative plate, battery assembly and battery testing are the same as those in Embodiment 1. The test results of initial efficiency, 5C reversible capacity and cycle performance at 5C rate are listed in Table 1.

The test results of initial efficiency, 5C reversible capacity and cycle performance at 5C rate of the negative electrode materials in Embodiments 1-14 and Comparative example 1 are as follows.

**Table 1**

| | Initial efficiency | 5C reversible capacity (mAh/g) | 100-cycle retention ratio% at 5C rate | 500-cycle retention ratio% at 5C rate |
|---|---|---|---|---|
| Embodiment 1 | 79.12 | 1801 | 93 | 83 |
| Embodiment 2 | 79.01 | 1797 | 92 | 79 |
| Embodiment 3 | 78.74 | 1790 | 92 | 77 |
| Embodiment 4 | 78.96 | 1786 | 90 | 81 |
| Embodiment 5 | 78.92 | 1750 | 93 | 82 |
| Embodiment 6 | 79.16 | 1751 | 91 | 83 |
| Embodiment 7 | 78.62 | 1803 | 90 | 79 |
| Embodiment 8 | 79.28 | 1761 | 92 | 77 |
| Embodiment 9 | 78.61 | 1770 | 93 | 79 |
| Embodiment 10 | 78.93 | 1790 | 91 | 82 |
| Embodiment 11 | 78.57 | 1743 | 88 | 76 |
| Embodiment 12 | 78.56 | 1764 | 90 | 79 |
| Embodiment 13 | 78.32 | 1790 | 92 | 80 |
| Embodiment 14 | 78.49 | 1739 | 89 | 79 |
| Comparative example 1 | 79.18 | 1777 | 76 | 51 |

It can be seen from the data in the table that under the same test conditions, in Embodiments 1-14, a silicon-based negative electrode material is modified through bulk phase doping by using a carbon-containing gas source, and the cycle performance is very high. In Comparative example 1, silicon (II) oxide is only coated with carbon on the surface, and the cycle performance is much poorer than that in Embodiments 1-10.

It can be seen from the energy spectrum surface sweep in Fig. 1 that in Embodiment 1, carbon atoms are doped in the process of preparing a negative electrode material, which is bulk phase doping, so carbon atoms are uniformly distributed in the particles, thus improving the cycle performance of the material.

The above-mentioned specific embodiments further explain the purpose, technical solution and beneficial effects of the present invention in detail. It should be understood that the above embodiments are only specific ones of the present invention and are not used to limit the scope of protection of the present invention. Any modification, equivalent substitution, improvement, etc. made within the spirit and principles of the present invention should be included in the scope of protection of the present invention.

## Claims

1. A uniformly modified negative electrode material for a silicon-based lithium ion battery, wherein the negative electrode material for the silicon-based lithium ion battery has a structure that carbon atoms are uniformly dispersed in a silicon (II) oxide matrix at an atomic level, and in a focused ion beam-transmission electron microscope (FIB-TEM) test of the negative electrode material for the silicon-based lithium ion battery, an energy spectrum surface sweep of a particle section shows that carbon, oxygen and silicon elements inside the particles are uniformly distributed;
an average particle diameter D₅₀ of the particles in the negative electrode material for the silicon-based lithium ion battery is 1 nm-100 µm, and a specific surface area is 0.5 m²/g-40 m²/g; and a mass of the carbon atoms accounts for 0.1%-40% of a mass of the silicon (II) oxide matrix.

2. The negative electrode material for the silicon-based lithium ion battery according to claim 1, wherein a carbon coating layer is further provided outside the negative electrode material for the silicon-based lithium ion battery, and a mass of the carbon coating layer accounts for 0-20% of the mass of the silicon (II) oxide matrix.

3. The negative electrode material for the silicon-based lithium ion battery according to claim 2, wherein the mass of the carbon atoms accounts for 0.5%-10% of the mass of the silicon (II) oxide matrix, and the mass of the carbon coating layer accounts for 0-10% of the mass of the silicon (II) oxide matrix.

4. A preparation method for the negative electrode material for the silicon-based lithium ion battery according to any one of claims 1-3, comprising:
performing a gas phase mixing reaction on a carbon-containing gas source and a preheated mixed vapor of silicon and silicon dioxide for 1-24 hours under a protective atmosphere to obtain a material in which carbon atoms are uniformly dispersed in a silicon (II) oxide matrix at an atomic level; and
cooling the material to room temperature and discharging, pulverizing and screening the material to obtain particles in which the carbon atoms are uniformly dispersed in the silicon (II) oxide matrix at an atomic level, which are the negative electrode material for the silicon-based lithium ion battery.

5. The preparation method according to claim 4, wherein the carbon-containing gas source comprises one or more of methane, propane, butane, acetylene, ethylene, propylene, butadiene or carbon monoxide.

6. The preparation method according to claim 4, wherein after the material is cooled to room temperature, discharged, pulverized and screened, the preparation method further comprises:
performing a carbon coating on the screened material, and obtaining the negative electrode material after grading.

7. The preparation method according to claim 6, wherein the carbon coating comprises at least one of gas-phase coating, liquid-phase coating or solid-phase coating.

8. A negative plate comprising the negative electrode material for the silicon-based lithium ion battery according to any one of claims 1-3.

9. A lithium battery comprising the negative plate according to claim 8.
